(19) Europäisches Patentamt
European Patent Office
Office européen des brevets

(11) EP 4 317 346 A1

(12) EUROPEAN PATENT APPLICATION
published in accordance with Art. 153(4) EPC

(43) Date of publication:
**07.02.2024 Bulletin 2024/06**

(21) Application number: **22780577.7**

(22) Date of filing: **25.03.2022**

(51) International Patent Classification (IPC):
***C09J 11/06*** (2006.01) ***C08L 67/00*** (2006.01)
***C08L 101/16*** (2006.01) ***C09D 167/00*** (2006.01)
***C09J 167/00*** (2006.01) ***C08G 63/02*** (2006.01)
***C08G 63/78*** (2006.01)

(52) Cooperative Patent Classification (CPC):
**C08G 63/02; C08G 63/78; C08L 67/00; C08L 101/16; C09D 167/00; C09J 11/06; C09J 167/00**

(86) International application number:
**PCT/JP2022/014439**

(87) International publication number:
**WO 2022/210364 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.03.2021 JP 2021057766**

(71) Applicants:
- **TOYOBO CO., LTD.**
**Osaka-shi, Osaka 530-0001 (JP)**
- **Nagoya Institute Of Technology**
**Nagoya-shi, Aichi 466-8555 (JP)**

(72) Inventors:
- **UCHIYAMA, Shoko**
**Otsu-shi, Shiga 520-0292 (JP)**
- **TANAKA, Hideki**
**Otsu-shi, Shiga 520-0292 (JP)**
- **TAKASU, Akinori**
**Nagoya-shi, Aichi 466-8555 (JP)**

(74) Representative: **Müller-Boré & Partner Patentanwälte PartG mbB**
**Friedenheimer Brücke 21**
**80639 München (DE)**

# (54) POLYESTER AND PRODUCTION METHOD THEREFOR

(57) An object of the present invention is to provide a polyester resin that has a high degree of freedom in design and that can have excellent biodegradability even with an increased molecular weight. A polyester of the present invention contains a hydroxy group-containing dicarboxylic acid component and a diol component (excluding a hydroxy group-containing dicarboxylic acid component) as copolymerization components, wherein more than 50 mol% of an aliphatic diol component is contained in 100 mol% of the diol component, the polyester has a number average molecular weight of 3000 or higher, and the polyester has a total hydroxyl value of 1000 eq/ton or higher.

EP 4 317 346 A1

## Description

TECHNICAL FIELD

The present invention relates to a polyester resin having excellent biodegradability and a production method for the polyester resin.

BACKGROUND ART

A copolymerized polyester resin is generally composed of a polyvalent carboxylic acid and a polyhydric alcohol. The selection, the combination, and the magnitudes of the molecular weights of the polyvalent carboxylic acid and the polyhydric alcohol can be freely controlled, and thus copolymerized polyester resins have been widely used in various applications such as paints, coating agents, and adhesives.

In particular, polyesters having a hydroxyl groups on side chains have good reactivity with a curing agent and the like and are industrially useful, so that various types of polyesters have been proposed.

For example, Patent Literature 1 discloses a biodegradable aliphatic polyester polymer obtained by reacting an aliphatic dicarboxylic acid diglycidyl ester with an aliphatic dicarboxylic acid.

Patent Literature 2 discloses an electrophotographic toner for which a biodegradable polyester resin having a hydroxyl value of 0.5 to 5 mg KOH/g is used.

Patent Literature 3 discloses a gas-barrier laminate for which a polyester-based resin having a hydroxyl value of about 10 to 60 mg KOH/g formed from terephthalic acid, isophthalic acid, ethylene glycol, neopentyl glycol, etc., is used as a coating agent.

CITATION LIST

[PATENT LITERATURE]

[PTL 1] Japanese Examined Patent Publication No. H07-13129
[PTL 2] Japanese Patent No. 4368311
[PTL 3] Japanese Patent No. 4325303

SUMMARY OF THE INVENTION

PROBLEMS TO BE SOLVED BY THE INVENTION

Biodegradable polyesters have attracted attention as a solution to the microplastic problem in recent years. However, in the biodegradable aliphatic polyester polymer of Patent Literature 1, the diol unit is limited to a diglycidyl group-derived unit (i.e., corresponding to glycerin), and thus the degree of freedom in combining a polyvalent carboxylic acid unit and a polyhydric alcohol unit is low. The biodegradable polyester resin of Patent Literature 2 has a hydroxyl value of 5 mg KOH/g, which is low, so that it is difficult to say that the biodegradable polyester resin has sufficient biodegradability. In addition, in the biodegradable polyester resin obtained in Patent Literature 3, hydroxyl groups exist only at the ends of the polymer, and thus the biodegradable polyester resin has a problem that when the molecular weight thereof is increased, the hydroxyl value thereof is decreased, resulting in poor biodegradability.

Also, the production method for the polyester resin of Patent Literature 2 is achieved by an esterification reaction at 180 to 220°C for 5 to 16 hours and a decompression reaction at 180 to 220°C for 2 to 16 hours, and thus has a problem that the method has a high environmental load. There is no description of a production method for the polyester resin in Patent Literatures 1 and 3, and a method by which a polyester resin having excellent biodegradability can be produced with a low environmental load has not been known.

An object of the present invention is to provide a polyester resin that has a high degree of freedom in design and that can have excellent biodegradability even with an increased molecular weight. Also, an object of the present invention is to provide a production method by which a polyester resin having excellent biodegradability can be synthesized with a low environmental load. A preferred object of the present invention is to provide a method by which a polyester having a hydroxyl group on a side chain can be produced with a high degree of freedom.

SOLUTION TO THE PROBLEMS

The present invention, which solve the above problem has the following configuration:

[1] A polyester comprising a hydroxy group-containing dicarboxylic acid component and a diol component (excluding a hydroxy group-containing dicarboxylic acid component) as copolymerization components, wherein

more than 50 mol% of an aliphatic diol component is contained in 100 mol% of the diol component,
the polyester has a number average molecular weight of 3000 or higher, and
the polyester has a total hydroxyl value of 1000 eq/ton or higher.

[2] The polyester according to above [1], wherein
the polyester has a degree of biodegradation of 10% or higher within 6 months measured on a basis of a BOD test (aerobic aqueous oxygen consumption measurement) specified in JIS K6950: 2000.
[3] The polyester according to above [1] or [2], wherein the polyester contains a structural unit represented by the following formula (1).

[Chem. 1]

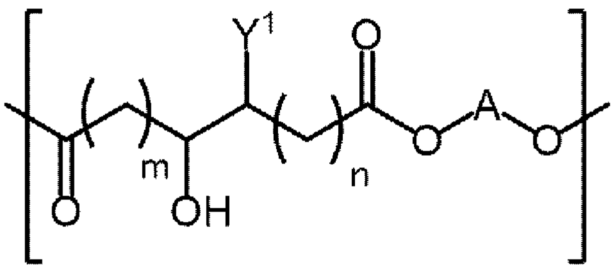

(1)

(wherein $Y^1$ is a group contained in the hydroxy group-containing dicarboxylic acid component and represents OH or a hydrogen atom, and A is a group contained in the diol component and represents a diol residue. m and n each independently represent an integer from 0 to 10.)
[4] The polyester according to any one of above [1] to [3], wherein the polyester contains fluorine of 500 mass ppm or more and sulfur of 250 mass ppm or more.
[5] The polyester of according to any one of above [1] to [4], wherein the polyester does not substantially contain any organic solvent.
[6] A polyester resin composition comprising the polyester of any one of above [1] to [5] and a curing agent having reactivity with hydroxyl groups.
[7] An adhesive comprising the polyester according to any one of above [1] to [5].
[8] A paint comprising the polyester according to any one of above [1] to [5].
[9] A production method for a polyester, the method comprising condensing a hydroxy group-containing dicarboxylic acid and a diol by a low-temperature melt polycondensation method at 60 to 150°C.

ADVANTAGEOUS EFFECTS OF THE INVENTION

According to the present invention, it is possible to provide a polyester resin that has a high degree of freedom in design and that can have excellent biodegradability even with an increased molecular weight. Also, with the production method of the present invention, it is possible to synthesize a polyester resin having excellent biodegradability with a low environmental load. In particular, with the production method of the present invention, it is possible to produce a polyester having a hydroxyl group on a side chain with a high degree of freedom.

DESCRIPTION OF EMBODIMENTS

The polyester of the present invention is a copolymerized polyester composed of a polyvalent carboxylic acid component and a polyhydric alcohol component (excluding a hydroxy group-containing dicarboxylic acid component), wherein

the polyester contains a hydroxy group-containing dicarboxylic acid component as the polyvalent carboxylic acid component,

the polyester contains a diol component as the polyhydric alcohol component, and more than 50 mol% of an aliphatic diol component is contained in 100 mol% of the diol component,
the polyester has a number average molecular weight of 3000 or higher, and
the polyester has a total hydroxyl value of 1000 eq/ton or higher.

The polyester of the present invention has many hydroxy groups derived from the hydroxy group-containing dicarboxylic acid component, as side chain components, and thus exhibits excellent biodegradability even with an increased molecular weight. In addition, the hydroxy group-containing dicarboxylic acid component and the diol component are not particularly limited, and thus the degree of freedom in design can be increased.
The polyester of the present invention will be described below.

Hydroxy group-containing dicarboxylic acid component

The polyvalent carboxylic acid component forming the polyester of the present invention includes a hydroxy group-containing dicarboxylic acid component. The hydroxy group-containing dicarboxylic acid is a compound having one or more hydroxy groups (preferably alcoholic hydroxyl groups) and two carboxy groups, and is preferably a hydroxy group-containing aliphatic dicarboxylic acid.
The hydroxy group-containing aliphatic dicarboxylic acid is preferably a hydroxy alkane dicarboxylic acid, and the alkane may be linear or branched, and is preferably linear. In the hydroxy alkane dicarboxylic acid, the two carboxy groups are preferably bonded to different carbon atoms, the carboxy groups are more preferably bonded to carbon atoms at both ends of the longest chain of the alkane, and the carboxy groups are further preferably bonded to carbon atoms at both ends of the linear alkane. The hydroxy group-containing aliphatic dicarboxylic acid is most preferably a compound that is an $\alpha,\omega$-alkane dicarboxylic acid having hydroxy groups bonded to carbon atoms other than those at both ends.
The number of carbon atoms of the hydroxy group-containing dicarboxylic acid is not particularly limited, is preferably 3 or larger and more preferably 4 or larger, and is preferably 24 or smaller, more preferably 14 or smaller, and further preferably 10 or smaller. Also, the number of hydroxy groups is not particularly limited, and is, for example, 1 to 4, and preferably 1 or 2. In the case of having a plurality of hydroxy groups, the plurality of hydroxy groups are preferably bonded to different carbon atoms.
Examples of the hydroxy group-containing dicarboxylic acid component include 2-hydroxypropanedioic acid (also called tartronic acid), 2-hydroxybutanedioic acid (also called malic acid), 2,3-dihydroxybutanedioic acid (also called tartaric acid), 2-dihydroxy-2-methylbutanedioic acid (also called citramalic acid), 3-hydroxypentanedioic acid, 2,3,4-trihydroxypentanedioic acid, 2-hydroxyhexanedioic acid, and 2,3,4,5-tetrahydroxyhexanedioic acid. Malic acid and tartaric acid are particularly preferable. One or more hydroxy group-containing dicarboxylic acid components may be selected and used.
Preferably, the hydroxy group-containing dicarboxylic acid component of the present invention does not contain any functional groups other than the hydroxy groups and the two carboxy groups contained in the hydroxy group-containing dicarboxylic acid component. Examples of the functional groups that are preferably not contained include thiol groups, aldehyde groups, azide groups, halogen groups, disulfide groups, sulfinyl groups, sulfonyl groups, methylidene groups, and other carboxy groups other than the carboxy groups contained in the hydroxy group-containing dicarboxylic acid.
As a copolymerization component, a polyvalent carboxylic acid component other than the hydroxy group-containing dicarboxylic acid component (hereinafter, referred to as other polyvalent carboxylic acid component) may be contained.
The other polyvalent carboxylic acid component is a polyvalent carboxylic acid that does not contain any reactive functional groups other than carboxy groups involved in polymerization. Examples of the other polyvalent carboxylic acid component include alicyclic polyvalent carboxylic acids, aliphatic polyvalent carboxylic acids, and aromatic polyvalent carboxylic acids. These other polyvalent carboxylic acid components may be either tricarboxylic acids or dicarboxylic acids other than the above hydroxy group-containing dicarboxylic acid component (sometimes referred to as other dicarboxylic acids), and are preferably the other dicarboxylic acids.
Specific preferred examples of the alicyclic polyvalent carboxylic acids include alicyclic dicarboxylic acids such as 1,4-cyclohexanedicarboxylic acid, 1,3-cyclohexanedicarboxylic acid, 1,2-cyclohexanedicarboxylic acid, and acid anhydrides thereof.
Specific preferred examples of the aliphatic polyvalent carboxylic acids include aliphatic dicarboxylic acids such as succinic acid, adipic acid, azelaic acid, sebacic acid, dodecanedioic acid, dimer acid, 1,2,3-propane tricarboxylic acid, and 1,3,5-pentane tricarboxylic acid.
Specific preferred examples of the aromatic polyvalent carboxylic acids include: aromatic dicarboxylic acids such as terephthalic acid, isophthalic acid, orthophthalic acid, naphthalene dicarboxylic acid, biphenyldicarboxylic acid,

diphenic acid, and 5-hydroxyisophthalic acid; and aromatic dicarboxylic acids having a sulfonic acid group or a sulfonic acid salt group such as sulfoterephthalic acid, 5-sulfoisophthalic acid, 4-sulfophthalic acid, 4-sulfonaphthalene-2,7-dicarboxylic acid, 5-(4-sulfophenoxy)isophthalic acid, and metal salts and ammonium salts thereof.

One or more other polyvalent carboxylic acid components may be selected and used.

In the case where the polyvalent carboxylic acid component is composed of a hydroxy group-containing dicarboxylic acid component and another polyvalent carboxylic acid component, it is preferable that the proportion of the hydroxy group-containing dicarboxylic acid component is higher. Specifically, the content of the hydroxy group-containing dicarboxylic acid component in 100 mol% of the polyvalent carboxylic acid component of the polyester is preferably higher in the order of 50 mol% or more, 60 mol% or more, 70 mol% or more, 80 mol% or more, 90 mol% or more, 95 mol% or more, 99 mol% or more, and 100 mol%.

Diol component

The polyhydric alcohol component forming the polyester of the present invention contains a diol component as a copolymerization component, and contains more than 50 mol% of an aliphatic diol component in 100 mol% of the diol component. When more than 50 mol% of the aliphatic diol component is contained, biodegradability can be improved due to a decrease in the glass transition point of the polyester and improvement of hydrophilicity.

The aliphatic diol component means a diol component containing only an aliphatic hydrocarbon group (monovalent to trivalent saturated or unsaturated hydrocarbon groups such as alkyl groups, alkylene groups, and alkyne groups (but containing tetravalent carbon atoms), but alicyclic hydrocarbon groups such as cycloalkyl groups are not contained) as a hydrocarbon group, and may be either a linear aliphatic diol or an aliphatic diol having a branched structure in a molecular structure, and may have a hydroxy group on either the main (longest) chain or a side chain of the aliphatic hydrocarbon. The aliphatic diol having a branched structure is preferable, and by introducing a branched structure, an amorphous polyester can be obtained, so that a flexible polymer material having excellent biodegradability can be provided.

The number of carbon atoms of the linear aliphatic diol is not particularly limited, is preferably 2 or larger, and is preferably 15 or smaller and more preferably 9 or smaller. Specific preferred examples of the linear aliphatic diol include ethylene glycol, 1,3-propanediol, 1,4-butanediol, 1,5-pentanediol, 1,6-hexanediol, 1,7-heptanediol, 1,8-octanediol, and 1,9-nonanediol.

The number of carbon atoms of the aliphatic diol having a branched structure is not particularly limited, is preferably 2 or larger, and is preferably 15 or smaller and more preferably 10 or smaller. Specific preferred examples of the aliphatic diol having a branched structure include 1,2-propylene glycol, 2-methyl-1,3-propanediol, neopentylglycol, 3-methyl-1,5-pentanediol, 2-ethyl-2-butylpropanediol, and dimethylol heptane.

In the present invention, a diol in which both ends of an aliphatic dicarboxylic acid having carboxylic acid groups at both ends are modified with glycol, a diol having an ether bond in an aliphatic diol (e.g., compounds in which an ether bond is inserted between the carbon-carbon bonds of the aliphatic hydrocarbon forming an aliphatic diol), and a diol having one ester bond in an aliphatic diol are also preferable as the aliphatic diol component. However, the hydroxy group-containing dicarboxylic acid component is excluded from the diol component.

Specific preferred examples of the aliphatic dicarboxylic acid whose both ends are modified with glycol correspond to the above specific preferred examples of the aliphatic polyvalent carboxylic acids.

Specific preferred examples of the diol having an ether bond in an aliphatic diol include diethylene glycol, triethylene glycol, dipropylene glycol, polyethylene glycol, polypropylene glycol, and polytetramethylene glycol.

Specific preferred examples of the diol having one ester bond in an aliphatic diol include hydroxypivalic acid neopentylglycol esters, monocaprylin, monocaprin, ethylene oxide adducts of neopentylglycol, and propylene oxide adducts of neopentylglycol. Also, in the present invention, the aliphatic diol component may be a diol polymer such as a polycarbonate diol (e.g., DURANOL (registered trademark) manufactured by Asahi Kasei Chemicals Corporation).

Either one of or both a linear aliphatic diol and an aliphatic diol having a branched structure may be used as the aliphatic diol component. One or more linear aliphatic diols may be used, or one or more aliphatic diols having a branched structure may be used.

The aliphatic diol component is also preferably a diol having a thioether bond in an aliphatic diol (e.g., a compound in which a thioether bond is inserted between the carbon-carbon bonds of the aliphatic hydrocarbon forming an aliphatic diol, and hereinafter referred to as dithioether diol component). In the dithioether diol component, it is preferable that, in addition to the thioether bond, an ester bond, an ether bond, etc. (preferably an ester bond) are also inserted. A preferred dithioether diol component also contains the following components having, at both ends, structures that can be diol components.

$$(H)\text{-}O\text{-}(CH_2)n\text{-}S\text{-}R\text{-}S\text{-}(CH_2)n\text{-}O\text{-}(H)$$

In the formula, n is 4 to 11, and R is an organic group not having an acidic proton. The (H) moiety is not present in the polyester, and O is bonded to the above dicarboxylic acid component to form an ester bond.

The above dithioether diol component (preferably $-O-(CH_2)n-S-R-S-(CH_2)n-O-$) may be a component introduced into the polyester by performing polycondensation of the corresponding diol (preferably $HO-(CH_2)n-S-R-S-(CH_2)n-OH$) with a dicarboxylic acid, or may be a component introduced into the polyester by performing a thiol-ene click reaction of a diester of a dicarboxylic acid and an unsaturated alcohol (preferably $HO-(CH_2)_{n-2}-CH=CH_2$) with a dithiol (preferably HS-R-SH). The unsaturated alcohol may be any compound other than $HO-(CH_2)_{n-2}-CH=CH_2$ exemplified above, as long as the compound is an alcohol having an ethylenic double bond, and is preferably a monohydric alcohol having a carbon double bond at one end and having a hydroxy group at the other end. In addition, the number of carbon atoms of the unsaturated alcohol is 3 to 11.

Specific preferred examples of the unsaturated alcohol include 3-buten-1-ol, 4-penten-1-ol, 5-hexen-1-ol, 6-hepten-1-ol, 7-octen-1-ol, 8-nonen-1-ol, 9-decen-1-ol, and 10-undecen-1-ol.

Dithiol (HS-R-SH)

The above dithiol is preferably an alkanedithiol or a dithiol having an ester bond.

The alkanedithiol preferably has 6 to 10 carbon atoms.

Specific preferred examples of the alkanedithiol include $\alpha,\omega$-alkanedithiols such as 1,8-octanedithiol, 1,6-hexanedithiol, and 1,10-decanedithiol.

Examples of the dithiol having an ester bond include diesters of diols (saturated aliphatic diols, etc.) and mercapto carboxylic acids (preferably mercapto saturated aliphatic carboxylic acids, etc.), and the dithiol having an ester bond is preferably a saturated aliphatic dicarboxylic acid ester having thiol groups at both ends. In addition, the number of carbon atoms of the dithiol having an ester bond is preferably 6 to 8. Specific preferred examples of the dithiol having an ester bond include ethylene bis(thioglycolate), 1,4-butanediol bis(thioglycolate), and ethylene bis(3-mercaptopropionate).

The polyester of the present invention contains more than 50 mol% of the aliphatic diol component in 100 mol% of the diol component, and may contain a diol component other than the aliphatic diol component (sometimes referred to as other diol component). As the other diol component, for example, one or more aromatic diol components or alicyclic diol components may be contained.

The aromatic diol component is, for example, a compound having one or more aromatic ring structures and two hydroxy groups in one molecule, and the number of carbon atoms included in the aromatic diol component is, for example, 6 to 20. The aromatic diol component is preferably an aromatic diol compound, a glycol-modified product of the aromatic diol compound, or a glycol-modified product of an aromatic dicarboxylic acid, and is more preferably a glycol-modified product of the aromatic diol compound or a glycol-modified product of the aromatic dicarboxylic acid.

Specific preferred examples of the aromatic diol compound include 1,2-phenylene glycol (catechol), 1,3-phenylene glycol (resorcinol), 1,4 phenylene glycol (hydroquinone), naphthalenediol, bisphenol A, and bisphenol F.

The glycol-modified product of the aromatic diol compound is not particularly limited, and is preferably a compound in which 2 moles of ethylene oxide or propylene oxide are added per mole of an aromatic diol. Specific preferred examples of the glycol-modified product of the aromatic diol compound include ethylene oxide adducts of 1,2-phenylene glycol, propylene oxide adducts of 1,2-phenylene glycol, ethylene oxide adducts of 1,3-phenylene glycol, propylene oxide adducts of 1,3-phenylene glycol, ethylene oxide adducts of 1,4-phenylene glycol, propylene oxide adducts of 1,4-phenylene glycol, ethylene oxide adducts of naphthalenediol, propylene oxide adducts of naphthalenediol, ethylene oxide adducts of bisphenol A, propylene oxide adducts of bisphenol A, ethylene oxide adducts of bisphenol F, and propylene oxide adducts of bisphenol F.

The glycol-modified product of the aromatic dicarboxylic acid is not particularly limited, and is preferably an aromatic dicarboxylic acid monoester or aromatic dicarboxylic acid diester obtained from 1 mole of an aromatic dicarboxylic acid and 1 mole of glycol or 1 mole of an aromatic dicarboxylic acid and 2 moles of glycol. Specific preferred examples of the glycol-modified product of the aromatic dicarboxylic acid include: ethylene glycol-modified products of terephthalic acid, propylene glycol-modified products of terephthalic acid, ethylene glycol-modified products of isophthalic acid, propylene glycol-modified products of isophthalic acid, ethylene glycol-modified products of orthophthalic acid, propylene glycol-modified products of orthophthalic acid, etc.; naphthalene dicarboxylic acid, biphenyldicarboxylic acid, diphenic acid, and 5-hydroxyisophthalic acid; and glycol-modified products of aromatic dicarboxylic acids having a sulfonic acid group or a sulfonic acid salt group, etc., such as sulfoterephthalic acid, 5-sulfoisophthalic acid, 4-sulfophthalic acid, 4-sulfonaphthalene-2,7-dicarboxylic acid, 5-(4-sulfophenoxy)isophthalic acid, sulfoterephthalic acid, and/or metal salts and ammonium salts thereof.

Among the above specific examples, glycols each obtained by adding 1 to 2 moles of ethylene oxide or propylene oxide to two phenolic hydroxyl groups of a bisphenol such as ethylene oxide adducts of bisphenol A (e.g., NEWPOL (registered trademark) BPE-20T, manufactured by Sanyo Chemical Industries, Ltd.) and propylene oxide adducts of

bisphenol A (e.g., NEWPOL BP-5P, manufactured by Sanyo Chemical Industries, Ltd.); and ethylene glycol-modified products of terephthalic acid such as bis-2-hydroxyethyl terephthalate (BHET), are more preferable.

The alicyclic diol component is a compound having one or more alicyclic structures (mainly 4- to 6-membered rings) and two hydroxy groups in one molecule, and the number of carbon atoms included in the alicyclic diol is, for example, 5 to 20. The alicyclic diol component is preferably an alicyclic diol compound or a glycol-modified product of an alicyclic dicarboxylic acid.

Specific preferred examples of the alicyclic diol compound include 1,4-cyclohexanediol, 1,4-cyclohexanedimethanol, tri cyclodecanediol, tricyclodecanedimethylol, spiroglycol, hydrogenated bisphenol A, ethylene oxide adducts of hydrogenated bisphenol A, and propylene oxide adducts of hydrogenated bisphenol A.

The glycol-modified product of the alicyclic dicarboxylic acid is not particularly limited, and is preferably an alicyclic dicarboxylic acid monoester or alicyclic dicarboxylic acid diester obtained from 1 mole of an alicyclic dicarboxylic acid and 1 mole of glycol or 1 mole of an alicyclic dicarboxylic acid and 2 moles of glycol. Specific preferred examples of the glycol-modified product of the alicyclic dicarboxylic acid include ethylene glycol-modified products of 1,4-cyclohexanedicarboxylic acid, propylene glycol-modified products of 1,4-cyclohexanedicarboxylic acid, ethylene glycol-modified products of 1,3-cyclohexanedicarboxylic acid, propylene glycol-modified products of 1,3-cyclohexanedicarboxylic acid, ethylene glycol-modified products of 1,2-cyclohexanedicarboxylic acid, and propylene glycol-modified products of 1,2-cyclohexanedicarboxylic acid.

The polyester of the present invention may contain a trihydric or higher alcohol component (hereinafter referred to as other polyhydric alcohol component) as the polyhydric alcohol component, and the trihydric or higher alcohol component is preferably a trihydric to hexahydric alcohol component and more preferably a trihydric alcohol component. Examples of the other polyhydric alcohol component include cyclic polyhydric alcohols such as aromatic polyhydric alcohols and alicyclic polyhydric alcohols, and trihydric or higher aliphatic alcohols. One or more other polyhydric alcohol components may be used.

Examples of trihydric alcohol components include aliphatic triols such as glycerin, trimethylolpropane, and trimethylolethane; alicyclic triols such as cyclohexanetriol; and aromatic triols such as pyrogallol and phloroglucinol.

Examples of tetrahydric alcohol components include erythritol, sorbitol, and pentaerythritol.

In the present invention, it is preferable that the proportion of the diol component (aliphatic diol component and diol component other than the aliphatic diol) in the total alcohol component is higher. Specifically, the content of the diol component in 100 mol% of the total alcohol component of the polyester is preferably higher in the order of 50 mol% or more, 60 mol% or more, 70 mol% or more, 80 mol% or more, 90 mol% or more, 95 mol% or more, 99 mol% or more, and 100 mol%.

In the present invention, the content of the aliphatic diol component in 100 mol% of the diol component is more than 50 mol%, preferably 60 mol% or more, more preferably 70 mol% or more, and further preferably 80 mol% or more.

Number average molecular weight: 3000 or higher

The number average molecular weight of the polyester of the present invention is 3000 or higher and preferably 4000 or higher. Considering the properties required in practical use such as the toughness of a coating film and the physical properties of a coating film during processing, it is necessary to set the number average molecular weight to 3000 or higher. In the polyester of the present invention, the hydroxyl value can be a predetermined value or higher even with an increased number average molecular weight, so that the polyester can have both toughness and hydrolyzability. The upper limit of the number average molecular weight is not particularly limited. In order to improve handleability in the manufacturing process, for example, to suppress an excessive increase in a melt viscosity during polycondensation to improve the ease of taking out from a reaction vessel such as a flask, the number average molecular weight is preferably 30000 or lower and more preferably 25000 or lower.

Total hydroxyl value: 1000 eq/ton or higher

The polyester of the present invention has a hydroxyl value of 1000 eq/ton or higher and preferably 2000 eq/ton or higher. The higher the hydroxyl value, the better the biodegradability is exhibited.

The upper limit of the hydroxyl value is not particularly limited, and considering a decrease in hydrolytic stability due to improvement of hydrophilicity, the hydroxyl value is preferably 15000 eq/ton or lower and more preferably 10000 eq/ton or lower.

The hydroxyl value is the sum of the hydroxy groups at the molecular ends of the polyester and the hydroxy groups on the side chains of the polyester. In addition, as for the method for measuring the hydroxyl value, the hydroxyl value is a value measured on the basis of JIS K0070, and the detailed conditions are as described in EXAMPLES.

Degree of biodegradation of polyester

The polyester of the present invention has excellent biodegradability, and has a degree of biodegradation of preferably 10% or higher within 6 months and more preferably 5% or higher within 1 month (30 days).

The degree of biodegradation of the polyester is a value measured on the basis of the BOD test (aerobic aqueous oxygen consumption measurement) specified in JIS K6950: 2000, and the detailed conditions are as described in EXAMPLES.

The polyester of the present invention preferably contains a structural unit represented by the following formula (1).

[Chem. 2]

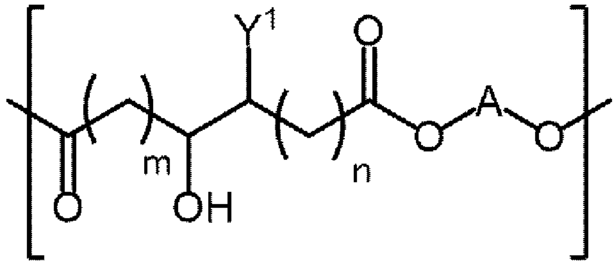

(1)

(wherein $Y^1$ is a group contained in the hydroxy group-containing dicarboxylic acid component and represents OH or a hydrogen atom, and A is a group contained in the diol component and represents a diol residue. m and n each independently represent an integer from 0 to 10.)

m and n are each an independent integer, are each 0 or larger and preferably 3 or larger, and are each 10 or smaller and preferably 5 or smaller.

The diol residue represented by A is at least a diol residue derived from the aliphatic diol component according to the present invention described above. The aliphatic diol component includes the linear aliphatic diol, the aliphatic diol having a branched structure, the diol in which both ends of an aliphatic dicarboxylic acid having carboxylic acid groups at both ends are modified with glycol, the diol having an ether bond in an aliphatic diol, the diol polymer, the diol having a thioether bond in an aliphatic diol, etc.

In the polyester of the present invention, when the total structural unit of the polyester is set at 100 mol%, the content of the structural unit of formula (1) is preferably higher in the order of 50 mol% or more, 60 mol% or more, 70 mol% or more, 80 mol% or more, 90 mol% or more, 95 mol% or more, 99 mol% or more, and 100 mol%.

Fluorine, sulfur

The polyester of the present invention may contain fluorine and sulfur. Fluorine contributes to improving the properties of the polyester such as water repellency, oil repellency, heat resistance, and chemical resistance. Also, sulfur contributes to increasing the melting point of the polyester.

The polyester of the present invention preferably contains 500 ppm by mass or higher of fluorine and 250 ppm by mass or higher of sulfur.

The content of fluorine is more preferably 1000 ppm by mass or higher and further preferably 2000 ppm by mass or higher. The upper limit of the content of fluorine is not particularly limited, but is preferably 10000 ppm by mass or lower, more preferably 8000 ppm by mass or lower, and further preferably 5000 ppm by mass or lower.

The content of sulfur is more preferably 500 ppm by mass or higher and further preferably 1000 ppm by mass or higher. The upper limit of the content of sulfur is not particularly limited, but is preferably 5000 ppm by mass or lower, more preferably 4000 ppm by mass or lower, and further preferably 3000 ppm by mass or lower since the heat resistance and the chemical resistance may be decreased if the content of sulfur is excessively high.

The contents of fluorine and sulfur are the contents of fluorine and sulfur derived from a catalyst, excluding sulfur derived from the dithioether diol component used as the diol component. Therefore, for example, when the polyester contains sulfur derived from the catalyst and sulfur derived from the dithioether diol component incorporated in the polymer, a value obtained by subtracting the content of sulfur incorporated in the polymer from a sulfur content obtained by ion chromatography analysis is the content of sulfur derived from the catalyst.

The contents of fluorine and sulfur can be adjusted, for example, by adjusting the amounts of fluorine and sulfur added during initial preparation, or by dropping the polyester diluted with a solvent into water after polyester polymerization and re-precipitating the polyester to separate the polyester and catalyst-derived components.

Organic solvent

As a preferred embodiment, the polyester of the present invention does not substantially contain any organic solvent.

If the polyester of the present invention which does not contain any organic solvent is used, various types of products such as adhesives and paints that are excellent for the human body and the environment can be produced.

Not substantially containing any organic solvent means that the content of an organic solvent in 100 % by mass of the polyester is preferably 5% by mass or lower, more preferably 2% by mass or lower, further preferably 1% by mass or lower, and particularly preferably 0% by mass.

The organic solvent is not particularly limited, and is various known organic solvents. Specific examples of the organic solvent include: aromatic hydrocarbon-based solvents such as benzene, toluene, and xylene; aliphatic hydrocarbon-based solvents such as hexane, heptane, and octane; ketone-based solvents such as acetone and methyl ethyl ketone; ester-based solvents such as ethyl acetate and propyl acetate; ether-based solvents such as dimethyl ether and diethyl ether; non-proton solvents such as N-methyl pyrrolidone (NMP) and N,N-dimethylformamide (DMF); etc.

Polyester resin composition

A resin composition using the polyester of the present invention is also a preferred embodiment. For example, a polyester resin composition containing the polyester of the present invention and a curing agent having reactivity with hydroxyl groups is preferable.

The curing agent only needs to contain a component that causes a curing reaction with the hydroxyl groups of the polyester. As such a curing agent, a commercially available curing agent may be used, and examples of the curing agent include polyisocyanate compounds such as DURANATE (registered trademark) 24A-100, TPA-100, and TLA-100, manufactured by Asahi Kasei Corporation. One or more curing agents may be used. The content of the curing agent in the resin composition can be set as appropriate in consideration of the application, use environment, curability, etc.

The applications of the polyester of the present invention and the polyester resin composition are not particularly limited, and the polyester of the present invention and the polyester resin composition are suitable, for example, for adhesive and paint applications. The content of the polyester of the present invention in the adhesive or paint can be set as appropriate in consideration of the application, use environment, curability, etc. For example, in terms of a solid component in the adhesive or paint, the content of the polyester of the present invention is preferably 50% by mass or higher, more preferably 60% by mass or higher, and further preferably 70% by mass or higher, and is preferably 95% by mass or lower and more preferably 90% by mass or lower.

Production method

Hereinafter, a production method for the polyester of the present invention will be described. There are a plurality of production methods for the polyester of the present invention, but the following production method 1 or production method 2 are preferable as a method for producing a polyester with a lower environmental load than conventional methods, specifically, by a low-temperature melt polycondensation method at 80°C to 150°C.

Production method 1

The production method 1 for the polyester of the present invention has the gist of producing the polyester of the present invention by condensing a hydroxy group-containing dicarboxylic acid and a diol by a low-temperature melt polycondensation method at 80 to 150°C.

In the production method 1 of the present invention, low-temperature melt polycondensation is enabled, so that a polyester resin having excellent biodegradability can be produced with a low environmental load.

Hydroxy group-containing dicarboxylic acid

The hydroxy group-containing dicarboxylic acid is the same as the above hydroxy group-containing carboxylic acid component. The term "same" means to use the above description including the suitable ranges and the specific examples.

In the present invention, a polyvalent carboxylic acid other than the hydroxy group-containing dicarboxylic acid (hereinafter, other polyvalent carboxylic acid) may be contained. The other polyvalent carboxylic acid is the same as the above other polyvalent carboxylic acid component.

In the case where a hydroxy group-containing dicarboxylic acid and another polyvalent carboxylic acid are used in combination, the ratio therebetween is also the same as the ratio between the above hydroxy group-containing dicarboxylic acid component and the above other polyvalent carboxylic acid component.

Aliphatic diol

The aliphatic diol is the same as the above aliphatic diol component.
Also, a diol other than the aliphatic diol, a trihydric or higher alcohol, etc., may be contained, and the proportion of the diol in the total alcohol, the proportion of the aliphatic diol in the diol, etc., are the same as the proportion of the diol component to the total alcohol component, the proportion of the aliphatic diol component in the diol component, etc.
In the case where a diol and another alcohol are used in combination, the ratio therebetween is the same as the ratio between the above diol component and the above other polyhydric alcohol component.
In the production method 1 of the present invention, the low-temperature melt polycondensation is preferably carried out in the presence of a triflate catalyst (trifluoromethanesulfonate: $CF_3SO_3^-$).
The use of the triflate catalyst increases the selectivity of the reaction and facilitates the low-temperature melt polycondensation at about 80 to 150°C.
Examples of the triflate catalyst include rare earth triflate catalysts, base metal triflate catalysts, and trifluoromethanesulfonyl imide. One or more triflate catalysts can be used. The rare earth metals used in the rare earth triflate catalysts are scandium (Sc), yttrium (Y), and lanthanoids, and scandium is preferable.
The lanthanoids are lanthanum (La), cerium (Ce), praseodymium (Pr), neodymium (Nd), samarium (Sm), europium (Eu), gadolinium (Gd), terbium (Tb), dysprosium (Dy), holmium (Ho), erbium (Er), thulium (Tm), ytterbium (Yb), and lutetium (Lu). One or more of these lanthanoids can be used.
One or more rare earth triflate catalysts can be used.
The base metals used in the base metal triflate catalysts are preferably copper (Cu), zinc (Zn), tin (Sn), hafnium (Hf), and bismuth (Bi), and one or more of these base metals can be used.
The low temperature in the low-temperature melt polycondensation is preferably 150°C or lower, more preferably 140°C or lower, further preferably 130°C or lower, even further preferably 120°C or lower, and particularly preferably 110°C or lower. The lower limit is not particularly limited, but is preferably 60°C or higher, more preferably 70°C or higher, further preferably 80°C or higher, and particularly preferably 90°C or higher since the reaction time becomes long when the temperature is excessively low.
In the production method 1, as a preferred embodiment, the low-temperature melt polycondensation is carried out in a solvent-free manner.
When the polycondensation reaction is carried out in a solvent-free manner, volume efficiency during the polycondensation reaction can be improved, and a polyester having a reduced load on the human body and the environment can be produced.
The solvent-free manner means that no organic solvent is substantially used, and specifically, the amount of an organic solvent per 100 parts by mass of the total amount of the copolymerization component is preferably 5 parts by mass or smaller, more preferably 2 parts by mass or smaller, further preferably 1 part by mass or smaller, and particularly preferably 0 parts by mass.
Specific examples of the organic solvent are the same as the above organic solvent, and thus the description thereof is omitted.
In the production method 1, as a preferred embodiment, the low-temperature melt polycondensation is carried out substantially without using any radical inhibitor.
In the case where no radical inhibitor is used, the polyester of the present invention can be efficiently produced while eliminating contamination of impurities derived from the radical inhibitor.
Examples of the radical inhibitor include hydroquinone, 2-methylhydroquinone, benzoquinone, and 2-methylbenzoquinone.
Substantially without using any radical inhibitor means, specifically, that the amount of the radical inhibitor per 100 parts by mass of the total amount of the copolymerization component is preferably 5 parts by mass or smaller, more preferably 2 parts by mass or smaller, further preferably 1 part by mass or smaller, and particularly preferably 0 parts by mass.
The polycondensation reaction time can be set as appropriate according to the types of the hydroxy group-containing dicarboxylic acid component and the diol component, the type of the catalyst, the reaction temperature, etc. The reaction time is preferably 1 hour or longer, more preferably 2 hours or longer, and further preferably 3 hours or longer, and is preferably 20 hours or shorter, more preferably 15 hours or shorter, and further preferably 12 hours or shorter.
As a preferred example of the production method 1, an example of synthesis of the polyester of the present invention using malic acid and 1,5-propanediol shown in Example 1 is shown.

[Chem. 3]

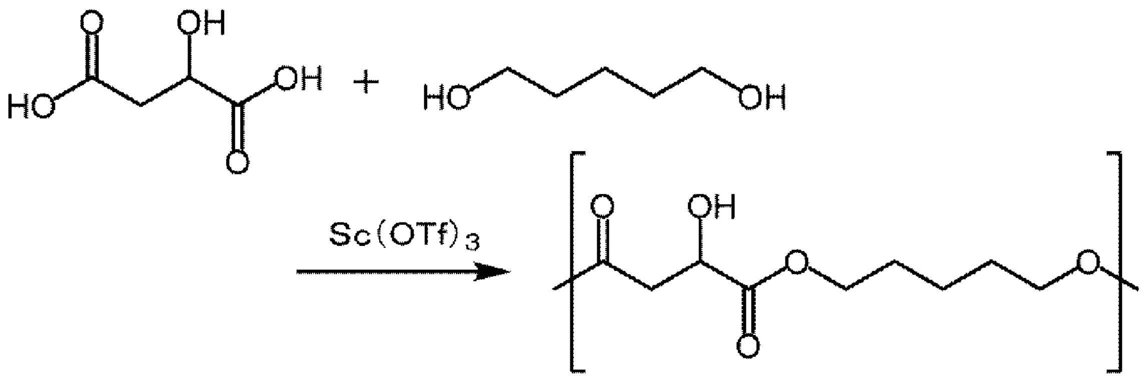


Production method 2

The production method 2 for the polyester of the present invention has the gist of: first reacting a hydroxy group-containing dicarboxylic acid with an unsaturated alcohol to synthesize an unsaturated aliphatic dicarboxylic acid ester having an ethylenic unsaturated group and a hydroxy group; and then causing a thiol-ene click reaction of the unsaturated aliphatic dicarboxylic acid ester having an ethylenic unsaturated group and a hydroxy group, with a dithiol component, to produce the polyester of the present invention.

Hydroxy group-containing dicarboxylic acid component

The hydroxy group-containing dicarboxylic acid component is the same as in the above production method 1, and thus the description thereof is omitted.

Unsaturated alcohol

The unsaturated alcohol is preferably an alcohol having a carbon double bond at one end, and is more preferably a monohydric alcohol having a carbon double bond at one end and having a hydroxy group at the other end. In addition, the number of carbon atoms of the unsaturated alcohol is preferably 3 to 11. Specific preferred examples of the unsaturated alcohol include 3-buten-1-ol, 4-penten-1-ol, 5-hexen-1-ol, 6-hepten-1-ol, 7-octen-1-ol, 8-nonen-1-ol, 9-decen-1-ol, and 10-undecen-1-ol.

Dithiol

The dithiol is preferably an alkanedithiol or a dithiol having an ester bond, and is more preferably a dithiol having an ester bond. The diol having an ester bond has better biodegradability than an alkanediol.
The alkanedithiol preferably has 6 to 10 carbon atoms. Specific preferred examples of the alkanedithiol include 1,8-octanedithiol, 1,6-hexanedithiol, and 1,10-decanedi thiol.
The dithiol having an ester bond is preferably a saturated aliphatic dicarboxylic acid ester having thiol groups at both ends. In addition, the number of carbon atoms of the dithiol having an ester bond is 6 to 8. Specific preferred examples of the dithiol having an ester bond include ethylene bis(thioglycolate), 1,4-butanediol bis(thioglycolate), and ethylene bis(3-mercaptopropionate).
In the production method 2, (2-1) first, an unsaturated aliphatic dicarboxylic acid ester having an ethylenic unsaturated group and a hydroxy group (e.g., bis(butenyl)malate: BMA) is obtained by a dehydration reaction of the unsaturated alcohol (e.g., 3-buten-1-ol) and the hydroxy group-containing dicarboxylic acid component (e.g., malic acid). The dehydration reaction based on the example is as follows.

[Chem. 4]

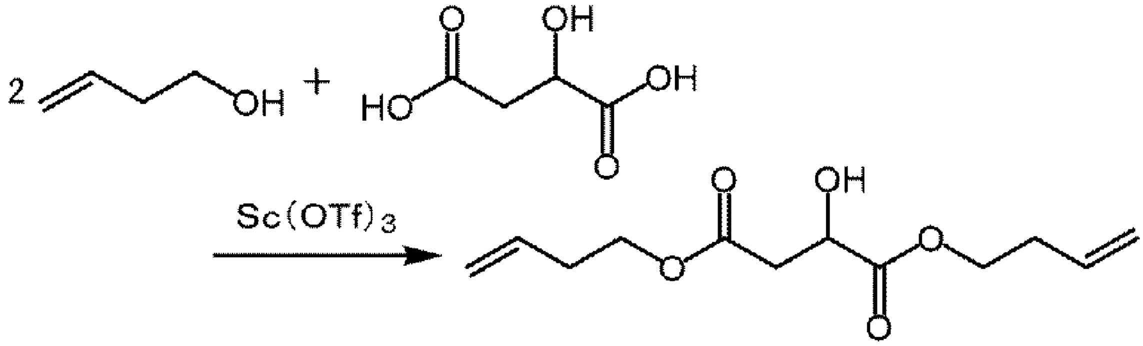


(2-2) Next, the polyester of the present invention, that is, a polyester containing the hydroxy group-containing dicarboxylic acid component and the diol component as copolymerization components, is obtained by a thiol-ene click reaction of the obtained unsaturated aliphatic dicarboxylic acid ester having an ethylenic unsaturated group and a hydroxy group (e.g., BMA) with an alkanedithiol (e.g., 1,8-octanedithiol represented by formula 2a) or a dithiol having an ester bond (e.g., ethylene bis(thioglycolate) represented by formula 2b). The thiol-ene click reaction based on the example is as follows.

[Chem. 5]

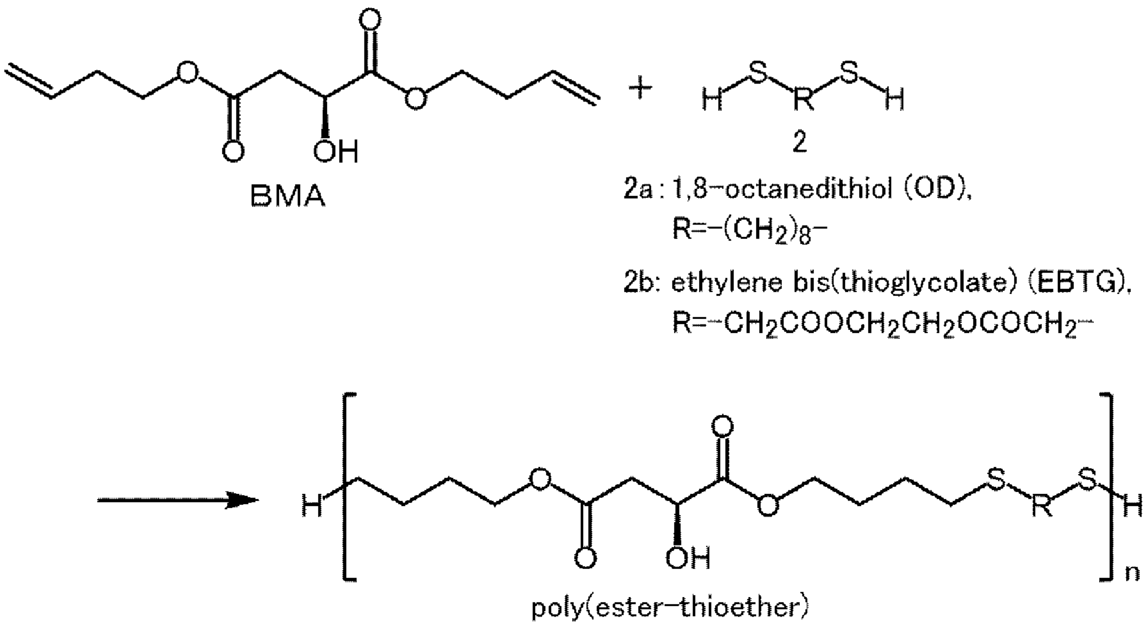


In the above (2-1) reaction of the unsaturated alcohol and the hydroxy group-containing dicarboxylic acid component, it is preferable to use a triflate catalyst as in the production method 1. The use of the triflate catalyst facilitates the reaction at a low temperature of about 80°C to 150°C.

In the above (2-2) reaction of the unsaturated aliphatic dicarboxylic acid ester having an ethylenic unsaturated group and a hydroxy group with the dithiol, it is preferable to use a radical polymerization initiator and an organic solvent.

As the radical polymerization initiator, various known polymerization initiators can be used, and specific examples of the radical polymerization initiator include 2,2'-azobis(isobutyronitrile) (AIBN), 2,2'-azobis(2-methylbutyronitrile) (AMBN), 2,2'-azobis(2,4-dimethylvaleronitrile) (ADVN), 4,4'-azobis(4-cyanovaleric acid) (ACVA), and benzoyl peroxide (BPO).

The addition amount of the radical polymerization initiator may be set as appropriate, and specifically, the use amount of the radical polymerization initiator per 100 parts by mass of the total of the unsaturated aliphatic dicarboxylic acid ester and a dithiol compound (A) is preferably 0.001 parts by mass or larger, more preferably 0.005 parts by mass or larger, and further preferably 0.01 parts by mass or larger, and is preferably 10 parts by mass or smaller, more preferably 5 parts by mass or smaller, and further preferably 3 parts by mass or smaller.

As the organic solvent, various known organic solvents can be used, and specifically, the organic solvents exemplified above such as toluene can be used.

The organic solvent may be any solvent capable of dissolving the raw materials, and is preferably an organic solvent having a boiling point of 50°C or higher and capable of uniformly dissolving the unsaturated aliphatic dicarboxylic acid ester and the dithiol which are the raw material monomers.

The reaction temperature in (2-2) above is, for example, 0 to 150°C and preferably 50 to 100°C.

This application claims priority to Japanese Patent Application No. 2021-057766 filed on March 30, 2021, the entire contents of which are incorporated herein by reference.

## EXAMPLES

The present invention will be described in more detail below by means of examples. However, the present invention is not limited by the following examples, and can also be carried out with modifications being made as appropriate within the scope of the gist of the present invention, and any of these modifications are included in the technical scope of the present invention.

In the following, unless otherwise noted, parts represent parts by mole. The measurement and evaluation methods employed herein are as follows.

<Number average molecular weight (Mn)>

A polyester sample was dissolved in tetrahydrofuran (THF) such that the resin concentration was about 0.5% by mass, and filtered through a polytetrafluoroethylene membrane filter with a pore diameter of 0.5 μm to prepare a sample for measurement. A molecular weight was measured by gel permeation chromatography (GPC) with THF as a mobile phase using a differential refractometer as a detector. The flow rate was set to 1 mL/min, and the column temperature was set to 30°C. Monodisperse polystyrene was used as a molecular weight standard. The number average molecular weight was calculated by omitting the portion corresponding to a molecular weight of less than 1000.

<Elemental analysis (fluorine and sulfur contents)>

<Pre-treatment and measurement methods>

20 mg of a sample (aromatic polyester) was collected in a magnetic boat and combusted in a quartz tubular furnace (AQF-2100H, manufactured by Mitsubishi Chemical Analytech Co., Ltd.), and the combustion gas was absorbed with 0.3% by mass-hydrogen peroxide water. Then, fluoride ions and sulfate ions in the absorbing solution were measured using an ion chromatograph (ICS-1600 model, manufactured by Thermo Fisher Scientific Inc.).

<Hydroxyl value>

Measurements were performed on the basis of JIS K0070 using an automatic titrator (COM-A19, manufactured by HIRANUMA Co., Ltd.). An acetylation reagent was added to a sample, and the sample was placed in a PEG thermostatic bath (100°C) and heated for 90 minutes. After cooling, water was added to decompose acetic anhydride. Potentiometric titration was performed with a 0.2 mol/L NaOH methanol solution using a potentiometric titrator, and a hydroxyl value was calculated on the basis of the following equation.

$$\text{Hydroxyl value} = \{((A - B) \times C)/D\} \times 1000 + E$$

A: titer of sample (mL)
B: titer of blank (mL)
C: factor of 0.2 mol/L NaOH methanol solution used for titration
D: sample amount (g)
E: acid value

<BOD (biochemical oxygen demand) test>

A test substance (polyester) and activated sludge were added to 200 ml of a basic culture solution as a composition solution specified in JIS K6950: 2000 such that the amount of the test substance (polyester) was 100 ppm and the amount of the activated sludge was 30 ppm. Then, the basic culture solution was kept at 25°C in a dark place and

incubated over 28 days while being stirred. During the above incubation period, the amount of oxygen consumed by the activated sludge was measured periodically, and a biochemical oxygen demand (BOD) curve was obtained.

A biodegradation ratio (%) was calculated, according to the following equation and the ratio of the theoretical oxygen demand (TOD) of the test substance, from a biochemical oxygen demand A (mg) of the test substance obtained from the above BOD curve, an oxygen consumption B (mg) of the blank, that is, the basic culture solution, obtained from the BOD curve, and a total oxygen demand (TOD: theoretical oxygen demand) C (mg) required for the complete oxidation of the test substance.

$$\text{Biodegradation ratio (\%)} = \{(A - B)/C\} \times 100$$

<Organic solvent content>

Approximately 0.5 g of a sample (polyester) (denoted by A) was placed in a dryer at 150°C, dried for 2 hours under a reduced pressure of 5 mmHg or lower, and then cooled to room temperature. After cooling, the sample was weighed (denoted by B). An organic solvent content was determined by the following equation.

$$\text{Organic solvent content (\% by mass)} = (A - B)/A \times 100$$

<Glass transition temperature>

A glass transition temperature was measured using a differential scanning calorimeter (DSC 220 model, manufactured by Seiko Electronics Industrial Co., Ltd.). Specifically, 5 mg of a sample was placed in an aluminum pan, the pan was sealed by pressing a lid thereon, and measurement was performed from -100°C to 300°C at a temperature increase rate of 20°C/min. The inflection point of the obtained curve was regarded as a glass transition temperature.

Example 1: Production of Polyester No. 1

In a 50 ml glass flask equipped with a stirrer, 40 parts of bis-2-hydroxyethyl terephthalate (BHET), 60 parts of 1,5-pentanediol (1,5-PD), 100 parts of malic acid, and 0.5 parts of scandium triflate ($Sc(OTf)_3$) were charged, and the mixture was made uniform at 100°C. After the raw materials were dissolved, the pressure in the system was gradually reduced to 5 mmHg over 30 minutes, and further reduced to a vacuum of 0.3 mmHg or lower, and then a polycondensation reaction was carried out at 110°C for 5 hours under the vacuum. Then, the contents were taken out and cooled. The composition, the number average molecular weight, etc., of Polyester No. 1 obtained are shown in Table 1.

Examples 2 to 8: Production of Polyester Nos. 2 to 8

Polyester Nos. 2 to 8 were synthesized and evaluated in the same manner as in Example 1, except that the raw materials to be charged, the ratio thereof, and the reaction temperature were changed as shown in Table 1. The evaluation results are shown in Table 1. Examples 6 to 8 are comparative examples.

Example 9: Production of Polyester No. 9

In a 50 ml glass flask equipped with a stirrer, 100 parts of malic acid, an excessive amount (300 parts) of 3-buten-1-ol, and 0.5 parts of scandium triflate were charged, and the mixture was stirred under reduced pressure at room temperature to synthesize targeted bis(butenyl)malate (BMA). Subsequently, with respect to the BMA, the same amount of ethylene bis(thioglycolate) as that of the BMA was dissolved in toluene together with 2,2'-azobis(isobutyronitrile) (AIBN), and thiol-ene click polymerization was performed at 70°C under nitrogen purge. It was confirmed by NMR that the targeted poly(ester-thioether) was obtained. The evaluation results are shown in Table 2. In Example 9, a value obtained by subtracting the content of sulfur derived from the diol component contained in a polymer unit (ethylene bis(thioglycolate): 141109 ppm) from a sulfur content (143318 ppm) measured by ion chromatography was regarded as a catalyst-derived sulfur content (2209 ppm). The content of sulfur derived from the diol component was calculated on the basis of the molecular weight of one polymer unit (malic acid/3-butene-1-ol/ethylene bis(thioglycolate) = 1/2/1) (453.55) and 64 sulfur atoms (32 $\times$ 2) contained in one polymer unit, as the content of sulfur derived from the diol component contained in the polymer (= 64/453.55 $\times$ 1000000).

[Table 1]

| Example | Resin No. | Polyvalent carboxylic acid component (parts) | | Polyhydric alcohol component (parts) | | Catalyst (parts) | Reaction temperature (°C) | Reaction time (hours) | Mn ($\times 10^4$) ($\times 10^4$) | Fluorine content (ppm by mass) | Sulfur content (ppm by mass) | Hydroxyl value (eq/ton) | BOD test (%) | Organic solvent content (%) | Glass transition temperature (°C) |
|---|---|---|---|---|---|---|---|---|---|---|---|---|---|---|---|
| 1 | 1 | Malic acid | 100 | BHET | 40 | $Sc(OTf)_3$ (0.5) | 110 | 5 | 0.55 | 3050 | 1712 | 3813 | 50 | <0.1 | 5 |
| | | | | 1,5-PD | 60 | | | | | | | | | | |
| 2 | 2 | Malic acid | 100 | BHET | 20 | $Sc(OTf)_3$ (0.5) | 110 | 5 | 0.45 | 3416 | 1918 | 4306 | 50 | <0.1 | -5 |
| | | | | 1,5-PD | 80 | | | | | | | | | | |
| 3 | 3 | Malic acid | 100 | 1,5-PD | 100 | $Sc(OTf)_3$ (0.5) | 110 | 5 | 0.47 | 3882 | 2179 | 4945 | 50 | <0.1 | -31 |
| 4 | 4 | Malic acid | 50 | 1,5-PD | 100 | $Sc(OTf)_3$ (0.5) | 110 | 5 | 0.6 | 3865 | 2170 | 2460 | 30 | <0.1 | -8 |
| | | Succinic acid | 50 | | | | | | | | | | | | |
| 5 | 5 | Tartaric acid | 100 | 1.5-PD | 100 | $Sc(OTf)_3$ (0.5) | 90 | 5 | 0.4 | 3363 | 1887 | 8466 | >50 | <0.1 | 30 |
| 6 | 6 | Methylsuccinic acid | 100 | 1,5-PD | 100 | $Sc(OTf)_3$ (0.5) | 110 | 5 | 0.5 | 3618 | 2031 | 449 | <5 | <0.1 | 9 |
| 7 | 7 | Succinic acid | 100 | 1,5-PD | 100 | $Sc(OTf)_3$ (0.5) | 110 | 5 | 0.6 | 3847 | 2160 | 576 | <5 | <0.1 | 15 |
| 8 | 8 | Adipic acid | 100 | 1,5-PD | 100 | $Sc(OTf)_3$ (0.5) | 100 | 5 | 0.4 | 3416 | 1918 | 500 | <5 | <0.1 | 30 |

[Table 2]

| Example | Resin No. | Polyvalent carboxylic acid component (parts) | Alcohol component (parts) | Catalyst (parts) | Dithiol component (parts) | Mn ($\times 10^4$) | Fluorine content (ppm by mass) | Sulfur content (ppm by mass) | Hydroxyl value (eq/ton) | BOD test (%) | Organic solvent content (%) | Glass transition temperature (°C) |
|---|---|---|---|---|---|---|---|---|---|---|---|---|
| 9 | 9 | Malic acid 50 | 3-buten-1-ol 100 | $Sc(OTf)_3$ (0.5) | Ethylene bis (thioglycolate) 50 | 0.44 | 3634 | 2209 | 2200 | 23 | <0.1 | -41 |

INDUSTRIAL APPLICABILITY

By using a specific polyvalent carboxylic acid and a specific diol, the polyester of the present invention can be synthesized through dehydration polycondensation under mild conditions without using any solvent. In addition, by using this method, a polyester having hydroxyl groups on the main chain and side chains thereof and having excellent biodegradability can be synthesized. Furthermore, the polyester of the present invention has many hydroxyl groups in the polymer, and thus not only exhibits biodegradability but also can react with a curing agent such as a melamine resin and isocyanate to produce a strong coating film. Therefore, the polyester of the present invention is a very useful polymer.

The polyester of the present invention can be used for various types of molded articles since the polyester has excellent biodegradability. As for the molded articles, the polyester of the present invention can be formed into, for example, fibers, films, sheets, etc. In addition, the polyester of the present invention which exists in a liquid state at room temperature exhibits biodegradability and adhesive properties, and thus can be applied to, for example, paints, coating agents, adhesives, etc.

Furthermore, the coating agents can be applied, for example, as coating agents for coating paper used for laminated tubes, paper handbags, laminated paper, paper adhesive tape, cardboard cups, cardboard containers, cardboard straws, cardboard for exterior use, paper labels, pots for plants and flowers, etc.

## Claims

1. A polyester comprising a hydroxy group-containing dicarboxylic acid component and a diol component (excluding a hydroxy group-containing dicarboxylic acid component) as copolymerization components, wherein

   more than 50 mol% of an aliphatic diol component is contained in 100 mol% of the diol component,
   the polyester has a number average molecular weight of 3000 or higher, and
   the polyester has a total hydroxyl value of 1000 eq/ton or higher.

2. The polyester according to claim 1, wherein
   the polyester has a degree of biodegradation of 10% or higher within 6 months measured on a basis of a BOD test (aerobic aqueous oxygen consumption measurement) specified in JIS K6950: 2000.

3. The polyester according to claim 1 or 2, wherein the polyester contains a structural unit represented by the following formula (1).

   [Chem. 1]

   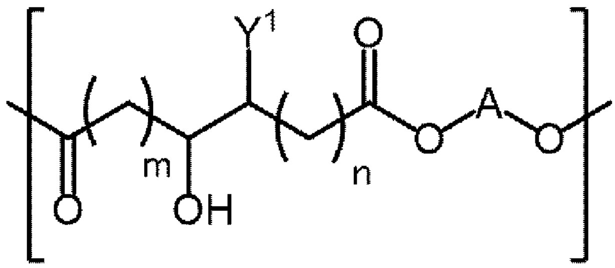

   (1)

   (wherein $Y^1$ is a group contained in the hydroxy group-containing dicarboxylic acid component and represents OH or a hydrogen atom, and A is a group contained in the diol component and represents a diol residue. m and n each independently represent an integer from 0 to 10.)

4. The polyester according to any one of claims 1 to 3, wherein the polyester contains fluorine of 500 mass ppm or more and sulfur of 250 mass ppm or more.

5. The polyester of according to any one of claims 1 to 4, wherein the polyester does not substantially contain any organic solvent.

6. A polyester resin composition comprising the polyester of any one of claims 1 to 5 and a curing agent having reactivity with hydroxyl groups.

**7.** An adhesive comprising the polyester according to any one of claims 1 to 5.

**8.** A paint comprising the polyester according to any one of claims 1 to 5.

**9.** A production method for a polyester, the method comprising condensing a hydroxy group-containing dicarboxylic acid and a diol by a low-temperature melt polycondensation method at 60 to 150°C.

## INTERNATIONAL SEARCH REPORT

International application No.
**PCT/JP2022/014439**

**A. CLASSIFICATION OF SUBJECT MATTER**

***C09J 11/06***(2006.01)i; ***C08L 67/00***(2006.01)i; ***C08L 101/16***(2006.01)i; ***C09D 167/00***(2006.01)i; ***C09J 167/00***(2006.01)i; ***C08G 63/02***(2006.01)i; ***C08G 63/78***(2006.01)i
FI: C08G63/02; C08L67/00; C08G63/78; C09J167/00; C09D167/00; C09J11/06; C08L101/16

According to International Patent Classification (IPC) or to both national classification and IPC

**B. FIELDS SEARCHED**

Minimum documentation searched (classification system followed by classification symbols)

C09J11/06; C08L67/00; C08L101/16; C09D167/00; C09J167/00; C08G63/02; C08G63/78

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 5-320326 A (AGENCY OF IND SCIENCE & TECHNOL) 03 December 1993 (1993-12-03) claims, examples | 1-5 |
| X | JP 6-340733 A (NIPPON POLYURETHANE IND CO LTD) 13 December 1994 (1994-12-13) claims, paragraph [0007], examples | 1-8 |
| X | JP 2005-336443 A (KURUMA, Yoshiaki) 08 December 2005 (2005-12-08) claims, examples | 1-8 |
| X | JP 6-340727 A (NIPPON POLYURETHANE IND CO LTD) 13 December 1994 (1994-12-13) claims, paragraph [0014], production examples, examples | 1-8 |

☐ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 June 2022** | **14 June 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

INTERNATIONAL SEARCH REPORT

International application No. **PCT/JP2022/014439**

**Box No. III Observations where unity of invention is lacking (Continuation of item 3 of first sheet)**

This International Searching Authority found multiple inventions in this international application, as follows:

Claims are classified into the following two inventions.

(Invention 1) Claims 1-8

Document 1 indicates that, as example 4, bis(2,3-epoxypropyl)-1,18-octadecane dicarboxylate (180 g, 0.30 mol) and malic acid (40.7 g, 0.30 mol) were used to produce a substantially linear biodegradable aliphatic polyester having a number average molecular weight of 9,800 (example). Since the biodegradable aliphatic polyester disclosed in document 1 has a substantially linear shape, that is, most of the hydroxyl groups derived from the monomer are not provided in a branched shape, and remain in the polyester as a hydroxyl group, the biodegradable aliphatic polyester can be said to have a hydroxyl value of at least 1,000 eq/ton. Therefore, the invention in claims 1-3 lacks novelty in light of document 1 and does not have a special technical feature.

Next, the special technical feature of a "polyester comprising, as copolymerization components, a hydroxyl group-containing dicarboxylic acid component and a diol component (however, the hydroxyl group-containing dicarboxylic acid component is excluded), the polyester being characterized in that the aliphatic diol component is more than 50 mol% with respect to 100 mol% of the diol component, the number average molecular weight is at least 3,000, and the total of the hydroxyl value is 1,000 eq/ton or more," wherein "the polyester contains at least 500 mass ppm of fluorine, and at least 250 mass ppm of sulfur" has been found in claim 4 dependent on claims 1-3.

Therefore, the invention in claims 1-4 and the invention in claim 5-8 which are dependent claims are classified as invention 1.

(Invention 2) Claim 9

The invention in claim 9 does not have the special technical feature found in (invention 1) above. In addition, claim 9 share the common technical feature of relating to a polyester comprising a hydroxyl group-containing dicarboxylic acid component and a diol component with claim 1, but said technical feature is disclosed in documents 1-3, and thus claim 9 does not have a special technical feature identical or corresponding to that of claim 1.

Furthermore, claim 9 is not substantially identical to or similarly closely related to any of the claims classified as invention 1.

Therefore, the invention in claim 9 cannot be classified as invention 1.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **claims 1-8**

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

**INTERNATIONAL SEARCH REPORT**
**Information on patent family members**

International application No.
**PCT/JP2022/014439**

| Patent document cited in search report | Publication date (day/month/year) | Patent family member(s) | Publication date (day/month/year) |
|---|---|---|---|
| JP 5-320326 A | 03 December 1993 | (Family: none) | |
| JP 6-340733 A | 13 December 1994 | (Family: none) | |
| JP 2005-336443 A | 08 December 2005 | (Family: none) | |
| JP 6-340727 A | 13 December 1994 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H0713129 B
- JP 4368311 B
- JP 4325303 B
- JP 2021057766 A